(19) **Europäisches Patentamt**
**European Patent Office**
**Office européen des brevets**

(11) **EP 2 747 261 B1**

(12) **EUROPEAN PATENT SPECIFICATION**

(45) Date of publication and mention
of the grant of the patent:
**12.02.2020 Bulletin 2020/07**

(51) Int Cl.:
*H02M 1/12* *(2006.01)* *H02M 1/15* *(2006.01)*
*H02M 1/00* *(2006.01)*

(21) Application number: **13196329.0**

(22) Date of filing: **09.12.2013**

(54) **Power conversion equipment**

Leistungsumwandlungsausrüstung

Équipement de conversion d'alimentation

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2012 JP 2012275693**

(43) Date of publication of application:
**25.06.2014 Bulletin 2014/26**

(73) Proprietors:
• **Hitachi, Ltd.**
**Tokyo 100-8280 (JP)**
• **Hitachi Mito Engineering Co., Ltd.**
**Hitachinaka-shi**
**Ibaraki 312-8506 (JP)**

(72) Inventors:
• **Sugiura, Tetsu**
**Chiyoda-ku, Tokyo 100-8280 (JP)**

• **Kojima, Tetsuo**
**Chiyoda-ku, Tokyo 100-8280 (JP)**
• **Shinomiya, Takeshi**
**Chiyoda-ku, Tokyo 100-8280 (JP)**
• **Kawamoto, Takehiro**
**Chiyoda-ku, Tokyo 100-8280 (JP)**
• **Muraoka, Kazufumi**
**Chiyoda-ku, Tokyo 100-8280 (JP)**

(74) Representative: **Mewburn Ellis LLP**
**City Tower**
**40 Basinghall Street**
**London EC2V 5DE (GB)**

(56) References cited:
**JP-A- H0 888 972       JP-A- 2000 116 189**
**JP-A- 2008 017 586    US-A1- 2011 121 798**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

Field of the invention

The present invention relates to a power conversion equipment of a railway vehicle for taking in direct current power through an overhead wire or a conductor rail, and specifically, relates to damping control for stabilizing DC voltage.

Description of the related art

In railway vehicles, a DC-DC converter is adopted widely as a control unit for electrical storage units such as an auxiliary power supply, a secondary battery or an electric double layer capacitor. The DC-DC converter is used with the aim to increase or decrease the DC voltage entered via a pantograph from a DC overhead wire, perform stability control of output voltage against voltage fluctuation of the overhead wire such as pantograph bounce, or electrically isolate the input-side circuit and the output-side circuit by adopting an isolation transformer in the DC-DC converter.

The above-described DC-DC converter is generally composed of a switching device adopting a semiconductor for converting power and a freewheel diode or a rectifier diode, for example, and controls the voltage or the current output from the DC-DC converter by alternately repeating an on state and an off state of the switching device. An LC filter circuit composed of a smoothing reactor for stabilizing the output current and a smoothing capacitor for stabilizing the output voltage are disposed to the output circuit of the DC-DC converter.

Since the switching operation via the switching device generates a high-frequency switching noise to the input circuit of the DC-DC converter, an LC filter circuit composed of a filter reactor and a filter capacitor is disposed between the pantograph and the DC-DC converter to cut off the switching noise.

This LC filter circuit behaves as a vibration system in the control system, so that damping control must be performed to suppress electrical vibration that is caused by the voltage fluctuation of the overhead wire, and stabilize the current of the filter reactor of the input circuit (hereinafter referred to as overhead wire current) and the filter capacitor voltage.

For example, Publication of Japanese Patent No. 4357592 (Patent Literature 1) discloses an example of damping control configured to extract an AC component of a filter capacitor voltage via a bandpass filter, and multiplying the same to a current command value. According to this method, the electrical vibration of the LC filter is suppressed by performing operation to emit resonance energy of the LC filter to the load when the instantaneous value of the AC component is positive and narrow down the emission of resonance energy when the value is negative.

Further, Japanese Patent Application Laid-Open Publication No. 2004-236395 (Patent Literature 2) adopts a configuration in which a resistor is connected in series with a filter reactor, and a semiconductor switching device is connected in parallel with the resistor. According to this system, the resonance of the LC filter is suppressed by switching an on state and an off state according to the amplitude of a resonance frequency component of the filter capacitor voltage, and consuming the resonance energy of the LC filter by the resistor.

The following is a non-patent literature disclosing a prior art of the present invention: Supervising editors; Toyoji Fukami, Tadao Fujimaki, "Revised Control Engineering (Volume One)", Tokyo Denki University Press, 1995, pp. 135 - 138 In the method disclosed in Patent Literature 1, the filter capacitor voltage is used for controlling the quantity of damping control, but for example, when increase or decrease of voltage accompanying fluctuation of overhead wire voltage occurs, the overhead wire current flowing in the filter reactor is fluctuated, which is transmitted and the fluctuation is conducted to the filter capacitor voltage. That is, by focusing on the various AC component phases such as the overhead wire current against the overhead wire voltage, and the filter capacitor voltage against the overhead wire current, it can be recognized that they satisfy a lagging phase relationship. Therefore, a fundamental problem occurs in which delay occurs to the transmission of energy according to the constant of the LC filter circuit, and sufficient control response cannot be achieved.

On the other hand, the method taught in Patent Literature 2 not only has the same problem as the method taught in Patent Literature 1, but also has a drawback that measures against temperature rise and heat radiation of the resistor and deterioration of energy efficiency must be provided, since the resonance energy generated by the LC filter is consumed by the resistor.

US 2011/121798 A1 proposes a DC/DC converter that calculates a damping operation amount for adjusting a state amount of a smoothing filter circuit based on the voltage of a capacitor in the smoothing filter circuit.

JP 2008 017586 A proposes a parallel system in which outputs of multiple auxiliary power supply devices are connected.

SUMMARY OF THE INVENTION

In order to achieve the above objects, the present invention provides a power conversion equipment as set out in claim 1.

A direct current power supplied from a DC power supply is fed to a DC-DC converter via a first LC filter including a first reactor and a first capacitor, and the direct current power subjected to power conversion in the DC-DC converter is fed to a load via a second LC filter including a second reactor and a second capacitor, the power conversion equipment having a first filter capacitor voltage as a control unit of the DC-DC converter, a subtractor for detecting voltage of the DC power supply and subtracting the DC power supply voltage from the filter capacitor voltage, and a high-pass filter for cutting off a DC component from the result of calculation of the subtractor and shifting the phase of an AC component to output a damping control quantity, wherein the power conversion equipment is controlled to suppress the electrical vibration that occurs to the first LC filter by adding the damping control quantity to a voltage command of the DC-DC converter.

The present invention enables to improve the control response in the fluctuation of voltage of overhead wires caused for example by pantograph bounce, and to realize stabilization of power supply. Thereby, the present invention can suppress flickering of lighting apparatuses or instantaneous stopping of electric instruments that has occurred during voltage drop.

BRIEF DESCRIPTION OF THE DRAWINGS

Fig. 1 is a view illustrating a configuration example of a power conversion equipment according to Embodiment 1 of the present invention.

Fig. 2 is a simplified view illustrating the behavior of voltage and current when voltage fluctuation of overhead wire occurs.

Fig. 3 is a simplified view illustrating a primary-side LC filter 5 and a peripheral circuitry thereof according to Embodiment 1.

Fig. 4 shows a simulation waveform of a case where overhead wire voltage drops according to an example adopting the prior art.

Fig. 5 shows a simulation waveform of a case where overhead wire voltage drops according to an example adopting Embodiment 1.

Fig. 6 is a view showing a configuration example of a power conversion equipment according to Embodiment 2 of the present invention.

Fig. 7 is a view showing a configuration example of a power conversion equipment according to the prior art.

DETAILED DESCRIPTION OF THE PREFERRED EMBODIMENTS

Now, Embodiments 1 and 2 according to the present invention will be described with reference to the drawings.

[Embodiment 1]

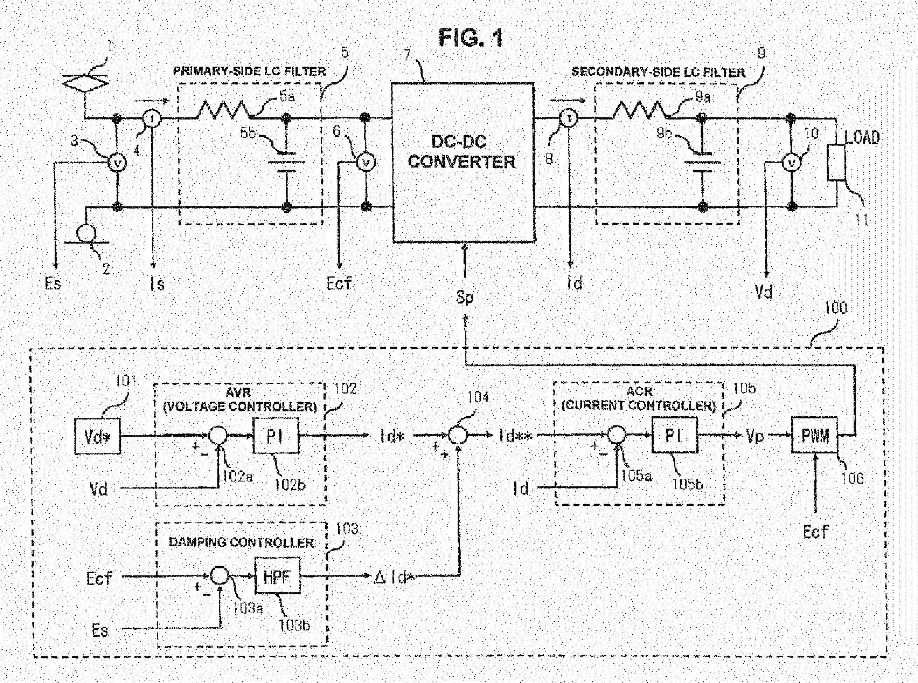

Fig. 1 is a view illustrating a configuration example of a power conversion equipment according to Embodiment 1 of the present invention.

A power conversion equipment is composed of a power collector 1, a wheel 2, voltage sensors 3, 6 and 10, current sensors 4 and 8, a primary-side LC filter 5 composed of a filter reactor 5a and a filter capacitor 5b, a DC-DC converter 7, a secondary-side LC filter 9 composed of a filter reactor 9a and a filter capacitor 9b, and a load 11.

An input circuit of a power conversion equipment is composed of a power collector 1 connected to a DC overhead wire, and a wheel 2 connected to a rail, wherein a substation not shown is connected to an end of the DC overhead wire and the rail. Generally, the direct current power supplied from the substation is supplied via the DC overhead wire from the power collector 1 to the power conversion equipment, and returned via the wheel 2 to the rail as a return path.

The direct current power entered to the power conversion equipment is entered at first via the primary-side LC filter 5 to the DC-DC converter 7. The DC-DC converter 7 is generally composed around a semiconductor device for power control, and controls the direct current power by switching the on and off statuses of the semiconductor device for switching control.

Further, the primary-side LC filter 5 is composed of a filter reactor 5a and a filter capacitor 5b, which is a filter circuit for removing high frequency waves disposed so as not to leak the harmonic noises generated by the conversion of power by the DC-DC converter 7 to the overhead wire or the rail.

The direct current power converted via the DC-DC converter 7 is supplied through the secondary-side LC filter 9 to the load 11. The secondary-side LC filter 9 is composed of a filter reactor 9a and a filter capacitor 9b, similar to the primary-side LC filter 5, which is a circuit for smoothing the direct current power output from the DC-DC converter 7 and stably outputting DC voltage.

Voltage sensors 3, 6 and 10 and current sensors 4 and 8 are provided to the power conversion equipment. These sensors are for monitoring the internal status of the power conversion equipment, which are used for improving the accuracy and responsiveness of output voltage control, and for preventing device failure caused by unexpected overvoltage or overcurrent.

A control unit 100 of the DC-DC converter 7 is composed of an internal variable 101, a voltage controller 102, a damping controller 103, an adder 104, a current controller 105, and a PWM controller 106.

The control unit 100 of the DC-DC converter 7 illustrated in present Embodiment 1 has two main types of functions. A first function thereof is to control an output voltage Vd of a filter capacitor 9b connected to the output side of the DC-DC converter 7 to a constant level (hereinafter referred to as constant voltage control), and a second function thereof is to suppress electrical vibration accompanying the resonance of the primary-side LC filter 5.

In order to realize constant voltage control which is the first function, the control unit 100 comprises a voltage controller (AVR) 102, a current controller (ACR) 105 and a PWM controller 106.

The voltage controller (AVR) 102 is a block for controlling an output voltage Vd detected via the voltage sensor 10 to maintain a constant level, which detects a difference between an output voltage command Vd* and an output voltage Vd, and based on the voltage deviation, computes an AVR control quantity Id* via a PI control unit 102b. The PI control unit 102b is a control block composed of a PI control system.

Now, if the value of the output voltage Vd is low compared to the output voltage command Vd*, the voltage of the secondary-side filter capacitor 9b must be raised, so that the AVR control quantity Id* is increased. Thereby, the charging current of the filter capacitor 9b is increased, and the voltage of the filter capacitor 9b can be raised.

In contrast, if the value of the output voltage Vd is high compared to the output voltage command Vd*, the voltage of the secondary-side filter capacitor 9b must be lowered, so that the AVR control quantity Id* is reduced. Thereby, the charging current of the filter capacitor 9b is reduced and the voltage of the filter capacitor 9b can be lowered.

According to the configuration of a PI controller 102b for realizing the above-described control, the relationship between the aforementioned voltage deviation and the AVR control quantity Id* can be expressed by the following expression (1).

[Expression 1]

$$Id^* = \left( Kvp + \frac{Kvi}{s} \right) \cdot \left( Vd^* - Vd \right) \quad \cdot \quad \cdot \quad \cdot \quad (1)$$

In the expression, s represents a differential operator, Kvp represents a p-term gain of the PI controller 102b, and Kvi represents an i-term gain of the PI controller 102b.

The current controller (ACR) 105 is a block for controlling an output current Id detected by the current sensor 8 to maintain a constant level, by calculating a difference between an output current command Id** and the output current Id, and based on the current deviation, computes a DC-DC voltage command Vp via the PI controller 105b. The PI controller 105b is a control block composed of the PI control system.

The aforementioned current control command Id** is a sum of the AVR control quantity Id* and a damping control quantity ΔId* mentioned later, and here, we will describe the control mode assuming that there is no electrical vibration by the primary-side LC filter and that the damping control quantity ΔId* is zero.

Now, if the value of output current Id is low compared to the output current command Id**, it is necessary to raise the DC-DC voltage command Vp.

In contrast, if the value of output current Id is high compared to the output current command Id**, it is necessary to lower the DC-DC voltage command Vp.

According to the configuration of the PI controller 105b for realizing the above-described control, the relationship between the aforementioned current deviation and the DC-DC voltage command Vp can be represented by the following expression (2).

[Expression 2]

$$Vp = \left( Kcp + \frac{Kci}{s} \right) \cdot \left( Id^{**} - Id \right) \quad \cdot \quad \cdot \quad \cdot \quad (2)$$

In the expression, s represents a differential operator, Kcp represents a p-term gain of the PI controller 105b, and Kci represents an i-term gain of the PI controller 105b.

The PWM controller 106 is a control block for calculating a switching command Sp of the DC-DC converter based on a DC-DC voltage command Vp and a filter capacitor voltage Ecf computed via a current controller. In the PWM controller 106, at first, the DC-DC voltage command Vp and the filter capacitor voltage Ecf are divided to calculate a conduction ratio γ, as shown in the following Expression (3).

[Expression 3]

$$\gamma = \frac{Vp}{Ecf} \quad \cdot \quad \cdot \quad ( \, 3 \, )$$

In the expression, conduction ratio γ refers to the output voltage ratio regarding the input of the DC-DC converter 7, wherein if the DC-DC converter 7 is a buck-type power conversion equipment, a value between 0 and 1 is selected.

A switching control command Sp is generated by comparing the conduction ratio γ and a level of a carrier wave ec not shown, and the command is output to the DC-DC converter 7. The relationship shown in the following expression (4) is satisfied in the switching command regarding the conduction ratio γ and the carrier wave ec.

[Expression 4]

$$Sp = \begin{cases} 1 & (\gamma \geq ec) \\ 0 & (\gamma < ec) \end{cases} \quad \cdot \quad \cdot \quad ( \, 4 \, )$$

In the expression, the carrier wave ec is a control signal having a triangular waveform or a sawtooth waveform, which varies periodically between 0 and 1. On the other hand, the switching command Sp is a control command for switching the status of the output voltage of the DC-DC converter 7 between cutoff "0" (off) and output "1" (on).

That is, by comparing the conduction ratio γ and the carrier wave ec, if the conduction ratio γ is greater than the carrier wave ec, the voltage of the DC-DC converter 7 is output, and if the conduction ratio γ is smaller than the carrier wave ec, the voltage of the converter 7 is cut off.

As described, considering the operation of the PWM controller 106, the conduction ratio γ calculated through division of the DC-DC voltage command Vp and the filter capacitor voltage Ecf is substantially constant if the control of the DC-DC converter 7 is operated stably.

On the other hand, the value of the carrier wave ec varies periodically between 0 and 1, so that the state of the voltage output from the DC-DC converter 7 is repeatedly alternated between cutoff and output, and this switching operation enables the desired voltage to be output from the DC-DC converter 7.

The above description illustrates the outline of the constant voltage control of the DC-DC converter.

Next, we will describe a damping control for suppressing electrical vibration of the primary-side LC filter 5, which is a second function of the control unit 100.

At first, we will describe the generation principle of electrical vibration that occurs accompanying the resonance phenomenon of an LC filter circuit.

With reference to Fig. 1, we will consider a case where an overhead wire voltage Es entered from the power collector 1 is supplied constantly and stably, and the power from the DC-DC converter 7 to the load 11 is also supplied constantly and stably.

Since the overhead wire voltage Es and the filter capacitor voltage Ecf correspond, and since the overhead wire current Is and the current entered from the DC-DC converter 7 correspond, no electrical vibration occurs to the primary-side LC filter 5, and the power conversion equipment operates stably.

On the other hand, we will consider a case where voltage fluctuation of the overhead wire voltage Es occurs as disturbance and the overhead wire voltage Es drops temporarily.

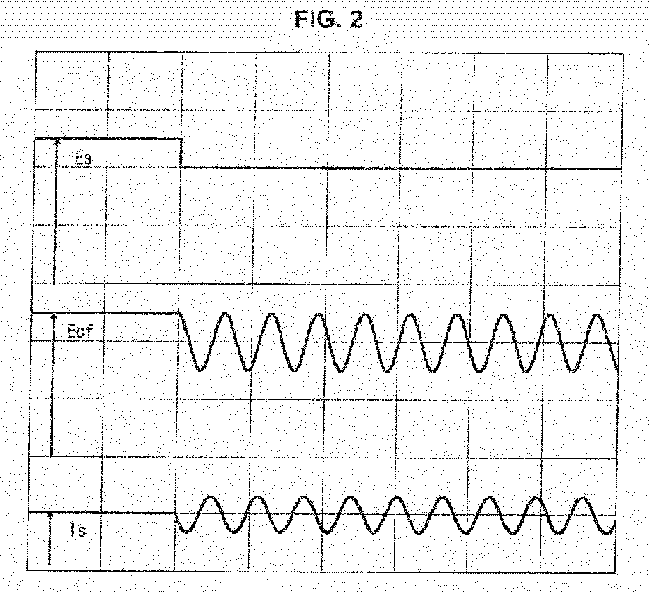

Fig. 2 is a view illustrating a simplified behavior of the overhead wire current Is and the filter capacitor voltage Ecf when the overhead wire voltage Es drops by disturbance. In order to simplify description, it is assumed that the loss generated by the filter reactor 5a is zero, and that the current discharged from the filter capacitor 5b to the DC-DC converter 7 is always constant.

At first, looking at the behavior of the overhead wire current Is, the overhead wire current Is is reduced and the filter capacitor voltage Ecf is also reduced along with the drop of the overhead wire voltage Es.

The overhead wire current Is repeats an operation to drop if the filter capacitor voltage Ecf is greater than the overhead wire voltage Es and increase if the filter capacitor voltage Ecf is smaller than the overhead wire voltage Es, so that the current has an alternating-current component.

Further, the filter capacitor voltage Ecf also continues to drop if the alternating-current component of the overhead wire current Is is negative and begins to increase if the alternating-current component of the overhead wire current Is becomes positive, so that it will have an alternating-current component similar to the overhead wire current Is.

From the above description, it is recognized that the voltage and current of the primary-side LC filter 5 vibrate by the fluctuation of the overhead wire voltage, and will not become stable.

Considering the actual circuit configuration, a DC load is connected in parallel with the filter capacitor 5b. If this DC load is a resistance load, the resonance energy of the LC filter will be consumed by the resistance load, and electrical vibration is damped naturally.

However, the DC-DC converter 7 acts as negative resistance, so that when there is no control to suppress electrical vibration, the converter operates to amplify electrical vibration.

Here, negative resistance refers to a load in which the amount of consumption of power is stable, and for example, in the DC-DC converter 7 of the present Embodiment 1, the negative resistance operates to increase the input current of the DC-DC converter 7 when the filter capacitor voltage Ecf drops, and in contrast, to reduce the input current when the filter capacitor voltage Ecf increases.

Therefore, if the load of the LC filter is a negative resistance, the control system becomes unstable since the load acts to promote electrical vibration accompanying resonance. Thus, it is recognized that suppression of electrical vibration by damping control is indispensable.

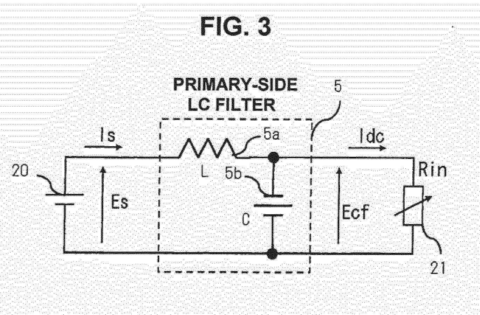

We will describe the principle of resonance of the LC filter in a quantitative manner. Fig. 3 shows a simplified view regarding the primary-side LC filter 5 and the peripheral circuitry thereof according to Embodiment 1. In Fig. 3, 20 represents a DC power supply, 21 represents a load showing a negative resistance property, wherein the reference numbers that appear in Fig. 1 are used to refer to the same components.

The load 21 corresponds to the DC-DC converter 7 of Fig. 1, which is a load in which the input negative resistance Rin becomes stable. Here, an input negative resistance Rin with respect to the filter capacitor voltage Ecf, the DC input current Idc and the input power Pin of the DC-DC converter 7 satisfies the relationship of the following expression (5).

[Expression 5]

$$Rin = \frac{Ecf}{Idc} \quad \text{whereas} \quad Pin = Ecfi \cdot Idc (= const) \quad \cdot \quad \cdot \quad (5)$$

Here, we will consider a closed-loop transfer function G (s) from the input voltage Es to the filter capacitor voltage Ecf in Fig. 3, as an inductance L of the filter reactor 5a and a capacitance c of the filter capacitor 5b of Fig. 3. The resistance component of the filter reactor 5a is considered to be small enough to ignore.

According to the circuit shown in Fig. 3, since the parallel circuit composed of the filter capacitor 5b and the negative resistance Rin is connected in series to the filter reactor 5a when seen from the input side, the closed-loop transfer function G (s) from the input voltage Es to the filter capacitor voltage Ecf can be represented by the following expression (6).

[Expression 6]

$$G(s) = \frac{\dfrac{Rin}{1+s \cdot C \cdot Rin}}{s \cdot L + \dfrac{Rin}{1+s \cdot C \cdot Rin}} = \frac{\dfrac{1}{L \cdot C}}{s^2 + \dfrac{1}{C \cdot Rin} \cdot s + \dfrac{1}{L \cdot C}} \quad \cdot \cdot \cdot \quad (6)$$

$$= \frac{\omega 0^2}{s^2 + 2 \cdot \xi \cdot \omega 0 \cdot s + \omega 0^2}$$

In Expression (6), s represents a differential operator, ω0 represents a resonance angular frequency, and ξ represents an attenuation coefficient. Based on the expression, the resonance angular frequency ω0 can be expressed by the following expression (7), and the attenuation coefficient ξ can be expressed by the following expression (8).

[Expression 7]

$$\omega 0 = \frac{1}{\sqrt{L \cdot C}} \quad \cdot \quad \cdot \quad \cdot \quad (\,7\,)$$

[Expression 8]

$$\xi = \frac{1}{2 \cdot \omega 0 \cdot C \cdot Rin} = \frac{1}{2 \cdot Rin} \cdot \sqrt{\frac{L}{C}} \quad \cdot \quad \cdot \quad \cdot \quad (\,8\,)$$

Since expression (6) has a second lag component, the condition in which expression (6) realizes a stable state is when the following condition is satisfied; $\xi$ is greater than or equal to $1/\sqrt{2}$ (Non-Patent Literature 1). By applying this condition to Expression (8), it can be recognized that the following Expression (9) must be satisfied to stabilize this control system.

[Expression 9]

$$Rin \leq \sqrt{\frac{1}{2} \cdot \frac{L}{C}} \quad \cdot \quad \cdot \quad \cdot \quad (\,9\,)$$

As described above, in order to suppress vibration of the DC input, the filter capacitor voltage Ecf and the AC component of the DC input current Idc should be controlled to satisfy the relationship of Expression (9). Thus, the following expression (10) can be obtained by varying Expression (5) and converting the same to an expression related to DC input current.

[Expression 10]

$$\Delta Idc = \frac{1}{Rin} \cdot \Delta Ecf \quad \cdot \quad \cdot \quad \cdot \quad (\,10\,)$$

Now, $\Delta$Idc of Expression (10) is the AC component of the DC input current Idc, and $\Delta$Ecf is the AC component of the filter capacitor voltage Ecf.

Based on the relationship of Expression (10), it can be recognized that the control system is stabilized by coordinating the phases of the DC input current $\Delta$Idc and the filter capacitor voltage $\Delta$Ecf.

If the electrical vibration is to be suppressed using this Expression (10), it is necessary to replace the DC input current $\Delta$Idc with the control quantity of the output side of the DC-DC converter 7.

The AC component $\Delta$Id of the output current with respect to the DC input current $\Delta$Idc satisfies the relationship of the following Expression (11) using the conduction ratio $\gamma$.

[Expression 11]

$$\Delta Idc = \gamma \cdot \Delta Id \quad \cdot \quad \cdot \quad \cdot \quad (\,11\,)$$

Now, based on the relationship of Expressions (10) and (11), the conditions for stabilizing the filter capacitor voltage $\Delta$Ecf will be shown in the following Expression (12).

[Expression 12]

$$\Delta Id = Kdmp \cdot \Delta Ecf = \frac{1}{\gamma} \cdot \frac{1}{Rin} \cdot \Delta Ecf \quad \cdot \cdot \cdot \quad (12)$$

Here, Kdmp represents a coefficient (hereinafter referred to as damping control gain) for suppressing a DC input vibration.

Considering the configuration of the damping controller 103 of Fig. 1 based on the relationship of Expression (12), as for the AC component ΔEcf of the filter capacitor voltage of the Expression, an improved response property against the voltage fluctuation of the overhead wire can be expected by adding the overhead wire voltage Es thereto.

Therefore, the configuration of the damping controller 103 is as shown in the following Expression (13).

[Expression 13]

$$\Delta Id^* = Kdmp \cdot \frac{s \cdot Thpf}{1 + s \cdot Thpf}(Ecf - Es) \quad \cdot \cdot \cdot \quad (13)$$

Here, s represents a differential operator, Kdmp represents a damping control gain, and Thpf represents a time constant of a primary high-pass filter 103b.

As for the filter capacitor voltage Ecf and the overhead wire voltage Es in Expression (13), it is only necessary to detect the AC component thereof, so that the DC component is removed by the primary high-pass filter 103b. The time constant Thpf of the primary high-pass filter 103b should be determined to cutoff the DC component of the filter capacitor voltage Ecf and the overhead wire voltage Es, and to have the phase of the output current Id correspond in the vicinity of the resonance frequency of the primary-side LC filter.

Next, the damping control gain Kdmp can suppress electrical vibration by satisfying the relationships shown in Expressions (9) and (12).

The conditions thereof will be shown in the following Expression (14).

[Expression 14]

$$Kdmp > \frac{1}{\gamma}\sqrt{2 \cdot \frac{C}{L}} \quad \cdot \cdot \cdot \quad (14)$$

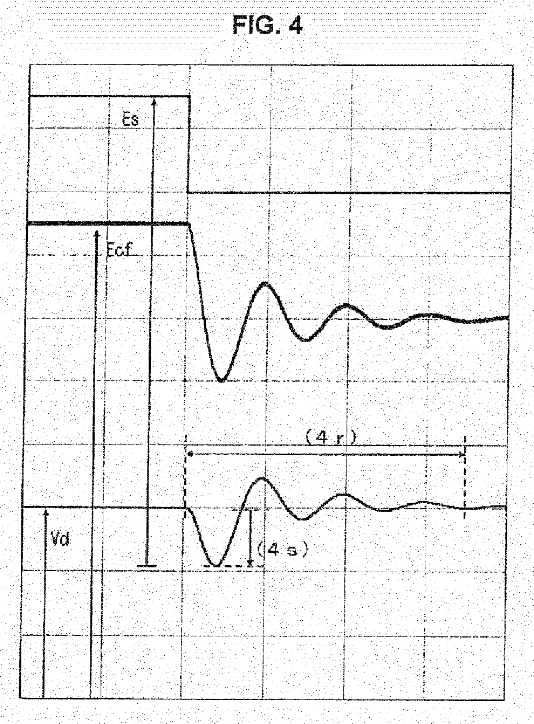

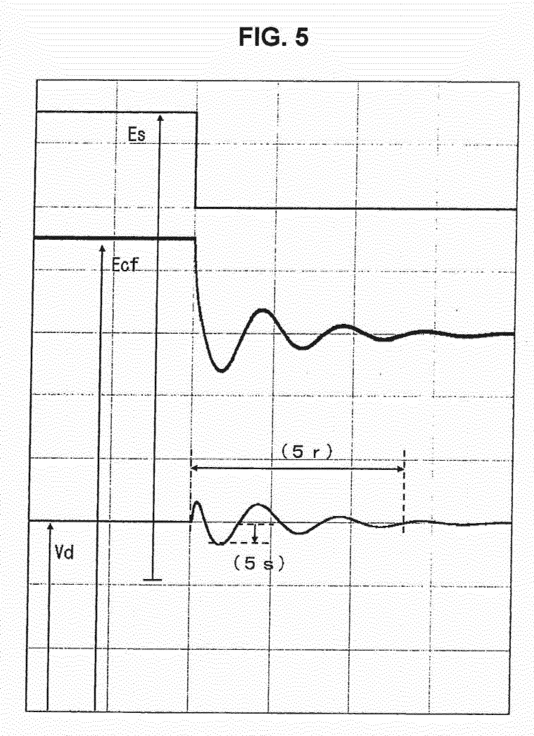

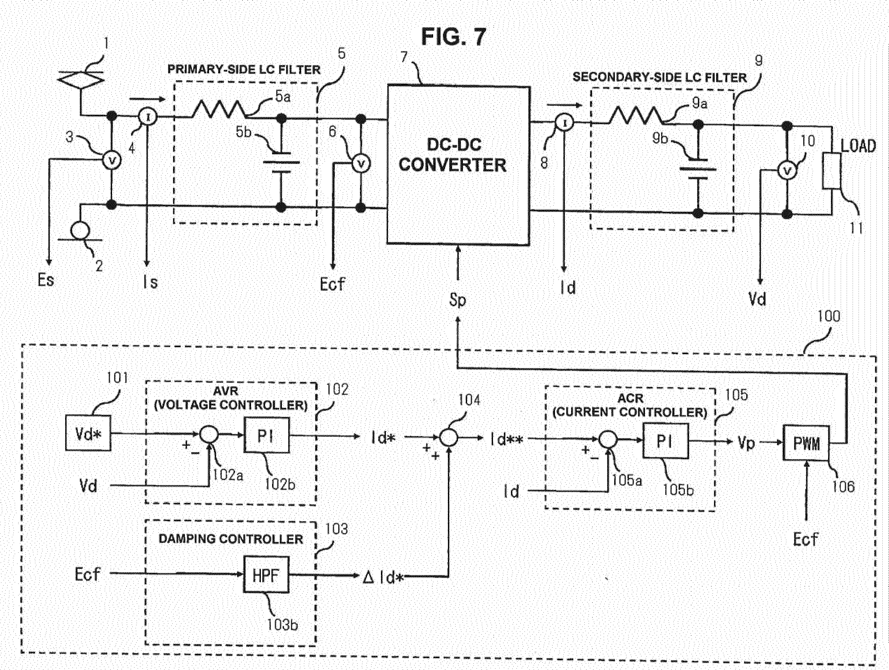

Now, the simulation waveforms will be compared between cases where the overhead wire voltage Es experiences voltage drop according to the prior art configuration and according to the configuration of the present Embodiment 1. Fig. 4 is a simulation waveform regarding the prior art configuration illustrated in Fig. 7, and Fig. 5 is a simulation waveform regarding the configuration of present Embodiment 1 illustrated in Fig. 1.

As the simulation condition, the overhead wire voltage Es is fluctuated from 1500 V to 1200 V at the second cell of the horizontal axis in the drawing. The circuit constant is set so that inductance L of the primary-side LC filter 5 is 8 mH, the capacitance C of the filter capacitor is 3200 μF, the conduction ratio γ during rated control is 0.4 and the damping control gain Kdmp in Expression (14) is 2.236. Further, the time constant Thpf of the primary high-pass filter is set to 7 ms.

As the result of the simulation during fluctuation of the overhead wire voltage Es, (4r) of Fig. 4 and (5r) of Fig. 5 represent convergence time, and (4s) of Fig. 4 and (5s) of Fig. 5 represent fluctuation voltage. Here, the convergence time is the time from when disturbance has occurred in the control system to when the output voltage Vd has converged within plus or minus 5 % of the target value. Further, the fluctuation voltage is voltage that has the greatest amount of increase or decrease of the control quantity when disturbance has occurred.

By comparing (4r) and (5r) illustrating the convergence time of the output voltage Vd, it can be recognized that the convergence time can be reduced by 30 % in (5r) when Embodiment 1 is applied.

Further, by comparing (4s) and (5s) illustrating the fluctuation voltage of the output voltage Vd, it can be seen that the fluctuation voltage is reduced to half the value when the present Embodiment 1 is applied (5s).

Based on the above results, it can be confirmed that the response speed is improved by applying the control according to Embodiment 1. Moreover, it can be confirmed that the rising of the output voltage Vd can be suppressed.

As described, by applying damping control of the DC-DC converter according to Embodiment 1 of the present invention, the improvement of control response against precipitous fluctuation of input voltage, such as the overhead wire voltage, can be expected.

[Embodiment 2]

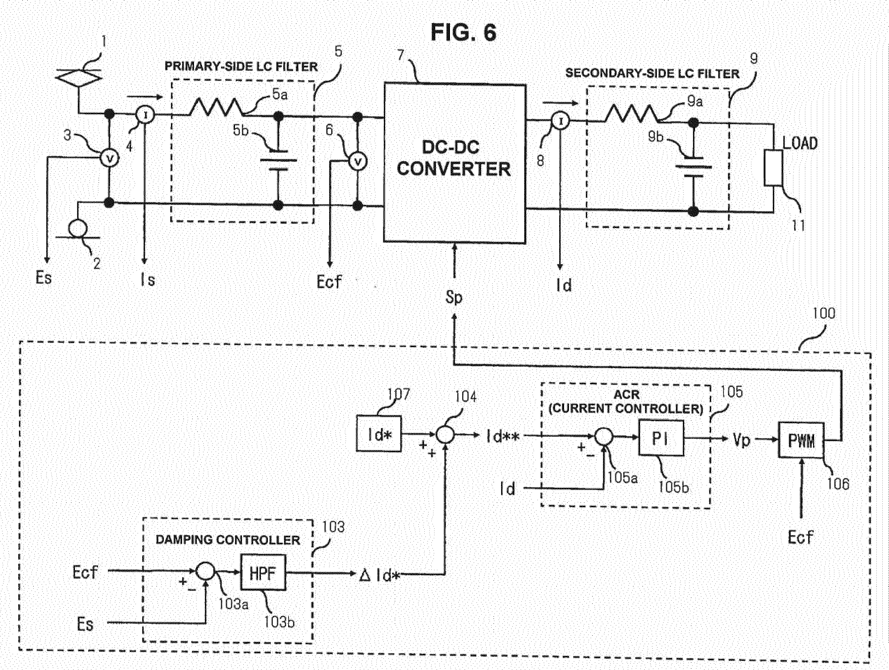

Fig. 6 is a view showing the configuration example of a power conversion equipment according to Embodiment 2 of the present invention.
The components having the same function as Fig. 1 are denoted by the same reference numbers.
The power conversion equipment is composed of a power collector 1, a wheel 2, voltage sensors 3 and 6, current sensors 4 and 8, a primary-side LC filter 5 including a filter reactor 5a and a filter capacitor 5b, a DC-DC converter 7, a secondary-side LC filter 9 including a filter reactor 9a and a filter capacitor 9b, and a load 11.
Further, a control unit 100 of a DC-DC converter 7 is composed of an internal variable 107, a damping controller 103 including a subtractor 103a and a primary high-pass filter 103b, an adder 104, a current controller 105 including a subtractor 105a and a PI controller 105b, and a PWM controller 106.
In the present Embodiment 2, the control unit 100 of the DC-DC converter 7 has a function to control the output current Id of the filter reactor 9a connected to the output side of the DC-DC converter 7 to maintain a constant level, and to suppress electrical vibration accompanying the resonance of the primary-side LC filter 5.
As described in Embodiment 2, by adopting a damping controller in the equipment for controlling the output current Id to maintain a constant level, it becomes possible to suppress the resonance of the LC filter against precipitous fluctuation of the input voltage, and improvement of control response can be expected.

**Claims**

1. A power conversion equipment for converting a DC voltage of a DC power supply (20), the power conversion equipment comprising:

   a DC-DC converter circuit (7) comprising a semiconductor device; and
   a first LC filter (5) composed of a first reactor (5a) and a first capacitor (5b) connected to an input side of the DC-DC converter circuit (7);
   wherein
   the power conversion equipment is configured to generate an electrical vibration suppression command for suppressing an electrical vibration caused by the first LC filter (5) based on a first voltage detection value (Ecf) detected from the first capacitor (5b); and
   the power conversion equipment is configured to add the electrical vibration suppression command to a switching command (Sp) applied to the DC-DC converter circuit (7);
   **characterized in that** the electrical vibration suppression command is also based on a second voltage detection value (Es) detected from the DC power supply (20), wherein the electrical vibration suppression command is generated by using a calculation result having subtracted the second voltage detection value (ES) from the first voltage detection value (Ecf) and by passing the calculation result obtained by the subtraction through a high-pass filter (103b).

2. The power conversion equipment according to claim 1, further comprising
   a voltage controller (102) for outputting a voltage command for stabilizing an output voltage of the DC-DC converter circuit (7) based on a third voltage detection value (Vd) detected from an output-side circuit of the DC-DC converter circuit (7); wherein the electrical vibration suppression command is added to the voltage command.

3. The power conversion equipment according to claim 1, wherein
   a second LC filter (9) composed of a second reactor (9a) and a second capacitor (9b) is connected to an output side of the DC-DC converter circuit (7); and
   the power conversion equipment further comprises
   a voltage controller (102) for outputting a current command (Id*) for stabilizing an output current of the DC-DC converter (7) via a fourth voltage detection value detected from the second capacitor (9b); and
   a current controller (105) for outputting a voltage command (Vp) for stabilizing an output current of the DC-DC converter based on a signal having added the electrical vibration suppression command to the current command and a first current detection value (Id) detected from the second reactor (9a).

4. The power conversion equipment according to claim 1, wherein
   a second LC filter (9) composed of a second reactor (9a) and a second capacitor (9b) are connected to an output side of the DC-DC converter circuit (7); and
the power conversion equipment further comprises
an adder (104) for adding the electrical vibration suppression command to a current command for subjecting an output current of the DC-DC converter circuit to constant current control; and
a current controller (105) for outputting a voltage command for the constant current control based on an output signal of the adder (104) and a first current detection value (Id) detected from the second reactor (9a).


**Patentansprüche**

1.  Leistungsumwandlungseinrichtung zur Umwandlung einer Gleichspannung einer Gleichstromleistungsversorgung (20), wobei die Leistungsumwandlungseinrichtung Folgendes umfasst:

    eine Gleichstrom-Gleichstrom-Wandlerschaltung (7), die eine Halbleitervorrichtung umfasst; und
    ein erstes LC-Filter (5), das aus einer ersten Drosselspule (5a) und einem ersten Kondensator (5b) besteht, die mit einer Eingangsseite der Gleichstrom-Gleichstrom-Wandlerschaltung (7) verbunden sind;
    wobei die Leistungsumwandlungseinrichtung konfiguriert ist, einen elektrischen Schwingungsunterdrückungsbefehl zum Unterdrücken einer elektrischen Schwingung, die durch das erste LC-Filter (5) hervorgerufen wird, auf Basis eines an dem ersten Kondensator (5b) detektierten, ersten Spannungsdetektionswerts (Ecf) zu erzeugen; und
    wobei die Leistungsumwandlungseinrichtung konfiguriert ist, einem Schaltbefehl (Sp), der auf die Gleichstrom-Gleichstrom-Wandlerschaltung (7) angelegt wird, den elektrischen Schwingungsunterdrückungsbefehl hinzuzuaddieren;
    **dadurch gekennzeichnet,**
    **dass** der elektrische Schwingungsunterdrückungsbefehl auch auf einem von der Gleichstromleistungsversorgung (20) detektierten, zweiten Spannungsdetektionswert (Es) basiert, wobei der elektrische Schwingungsunterdrückungsbefehl durch Verwendung eines Berechnungsergebnisses, bei dem der zweite Spannungsdetektionswert (ES) vom ersten Spannungsdetektionswert (Ecf) subtrahiert worden ist, und durch Leiten des durch die Subtraktion erhaltenen Berechnungsergebnisses durch ein Hochpassfilter (103b) erzeugt wird.

2.  Leistungsumwandlungseinrichtung nach Anspruch 1, ferner umfassend
    eine Spannungssteuereinheit (102) zur Ausgabe eines Spannungsbefehls, um eine Ausgangsspannung der Gleichstrom-Gleichstrom-Wandlerschaltung (7) auf Basis eines an einer ausgangsseitigen Schaltung der Gleichstrom-Gleichstrom-Wandlerschaltung (7) detektierten, dritten Spannungsdetektionswerts zu stabilisieren;
    wobei der elektrische Schwingungsunterdrückungsbefehl dem Spannungsbefehl hinzuaddiert ist.

3.  Leistungsumwandlungseinrichtung nach Anspruch 1,
    wobei ein zweites LC-Filter (9), das aus einer zweiten Drosselspule (9a) und einem zweiten Kondensator (9b) besteht, mit einer Ausgangsseite der Gleichstrom-Gleichstrom-Wandlerschaltung (7) verbunden ist; und
    wobei die Leistungsumwandlungseinrichtung ferner Folgendes umfasst:

    eine Spannungssteuereinheit (102) zur Ausgabe eines Strombefehls (Id*), um einen Ausgangsstrom des Gleichstrom-Gleichstrom-Wandlers (7) über einen an dem zweiten Kondensator (9b) detektierten, vierten Spannungsdetektionswert zu stabilisieren; und
    eine Stromsteuereinheit (105) zur Ausgabe eines Spannungsbefehls (Vp), um einen Ausgangsstrom des Gleichstrom-Gleichstrom-Wandlers auf Basis eines Signals, wobei der elektrische Schwingungsunterdrückungsbefehl dem Strombefehl hinzuaddiert worden ist, und eines an der zweiten Drosselspule (9a) detektierten, ersten Stromdetektionswerts (Id) zu stabilisieren.

4.  Leistungsumwandlungseinrichtung nach Anspruch 1,
    wobei ein zweites LC-Filter (9), das aus einer zweiten Drosselspule (9a) und einem zweiten Kondensator (9b) besteht, mit einer Ausgangsseite der Gleichstrom-Gleichstrom-Wandlerschaltung (7) verbunden ist; und
    wobei die Leistungsumwandlungseinrichtung ferner Folgendes umfasst:

    einen Addierer (104) zum Hinzuaddieren des elektrischen Schwingungsunterdrückungsbefehls zu einem Strombefehl, um einen Ausgangsstrom der Gleichstrom-Gleichstrom-Wandlerschaltung einer Konstantstromsteuerung zu unterziehen; und
    eine Stromsteuereinheit (105) zur Ausgabe eines Spannungsbefehls für die Konstantstromsteuerung auf Basis eines Ausgangssignals des Addierers (104) und eines an der zweiten Drosselspule (9a) detektierten, ersten Stromdetektionswerts (Id).

**Revendications**

1. Equipement de conversion de puissance pour convertir une tension de CC, CC, d'une alimentation CC ; (20), l'équipement de conversion de puissance comprenant :

   un circuit convertisseur CC-CC (7) comprenant un dispositif à semi-conducteur ; et
   un premier filtre LC (5) composé d'un premier réacteur (5a) et d'un premier condensateur (5b) connecté à un côté entrée du circuit convertisseur CC-CC (7) ;
   dans lequel
   l'équipement de conversion de puissance est configuré pour générer une instruction de suppression de vibration électrique afin de supprimer une vibration électrique provoquée par le premier filtre LC (5) sur la base d'une première valeur de détection de tension (Ecf) détectée à partir du premier condensateur (5b) ; et
   l'équipement de conversion de puissance est configuré pour ajouter l'instruction de suppression de vibration électrique à une instruction de commutation (Sp) appliquée au circuit convertisseur CC-CC (7) ;
   **caractérisé en ce que** l'instruction de suppression de vibration électrique est également basée sur une deuxième valeur de détection de tension (Es) détectée à partir de l'alimentation CC (20), dans lequel l'instruction de suppression de vibration électrique est générée en utilisant un résultat de calcul ayant soustrait la deuxième valeur de détection de tension (ES) de la première valeur de détection de tension (Ecf) et en faisant passer le résultat du calcul obtenu par soustraction à travers un filtre passe-haut (103b).

2. Équipement de conversion de puissance selon la revendication 1, comprenant en outre
   une commande de tension (102) pour délivrer en sortie une commande de tension afin de stabiliser une tension de sortie du circuit convertisseur CC-CC (7) sur la base d'une troisième valeur de détection de tension (Vd) détectée à partir d'un circuit côté sortie du circuit convertisseur CC-CC (7) ; dans lequel
   l'instruction de suppression de vibration électrique est ajoutée à la l'instruction de tension.

3. Équipement de conversion de puissance selon la revendication 1, dans lequel
   un second filtre LC (9) composé d'un second réacteur (9a) et d'un second condensateur (9b) est connecté à un côté sortie du circuit CC-CC (7) ; et
   l'équipement de conversion de puissance comprend en outre
   une commande de tension (102) pour délivrer en sortie une instruction de courant (Id*) pour stabiliser un courant de sortie du convertisseur CC-CC (7) via une quatrième valeur de détection de tension détectée à partir du second condensateur (9b) ; et
   une commande de courant (105) pour délivrer en sortie une instruction de tension (Vp) afin de stabiliser un courant de sortie du convertisseur CC-CC sur la base d'un signal ayant ajouté l'instruction de suppression de vibration électrique à l'instruction de courant, et une première valeur de détection de courant (Id) détectée à partir du second réacteur (9a).

4. Équipement de conversion de puissance selon la revendication 1, dans lequel
   un second filtre LC (9) composé d'un second réacteur (9a) et d'un second condensateur (9b) est connecté à un côté sortie du circuit convertisseur CC-CC (7) ; et
   l'équipement de conversion de puissance comprend en outre
   un additionneur (104) pour ajouter l'instruction de suppression de vibration électrique à une instruction de courant afin de soumettre un courant de sortie du circuit convertisseur CC-CC à une commande de courant constant ; et
   une commande de courant (105) pour délivrer en sortie une commande de tension pour la commande de courant constant sur la base d'un signal de sortie de l'additionneur (104) et d'une première valeur de détection de courant (Id) détectée à partir du second réacteur (9a).

FIG. 1

EP 2 747 261 B1

FIG. 2

FIG. 3

# FIG. 4

# FIG. 5

FIG. 6

PRIMARY-SIDE LC FILTER

SECONDARY-SIDE LC FILTER

DC-DC CONVERTER

LOAD

Es    Is    Ecf    Sp    Id

DAMPING CONTROLLER

ACR (CURRENT CONTROLLER)

Ecf
Es
HPF
ΔId*

Id*
Id**
PI
Vp
PWM

Id

Ecf

EP 2 747 261 B1

FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4357592 B
- JP 2004236395 A

- US 2011121798 A1
- JP 2008017586 A

**Non-patent literature cited in the description**

- Revised Control Engineering. Tokyo Denki University Press, 1995, 135-138